Europäisches Patentamt

European Patent Office

Office européen des brevets

(11) Veröffentlichungsnummer: **0 059 444**
B1

(12) **EUROPÄISCHE PATENTSCHRIFT**

(45) Veröffentlichungstag der Patentschrift:
13.11.85

(51) Int. Cl.⁴: **C 04 B 18/12**

(21) Anmeldenummer: 82101464.4

(22) Anmeldetag: 26.02.82

(54) **Hydraulisch abbindender Formstein, insbesondere für Bauwerke, und Verfahren zu dessen Herstellung.**

(30) Priorität: 27.02.81 DE 3107374
03.12.81 DE 3147855

(43) Veröffentlichungstag der Anmeldung:
08.09.82 Patentblatt 82/36

(45) Bekanntmachung des Hinweises auf die Patenterteilung:
13.11.85 Patentblatt 85/46

(84) Benannte Vertragsstaaten:
BE DE FR GB NL

(56) Entgegenhaltungen:
FR - A - 965 248
FR - A - 2 311 765
GB - A - 1 473 517

CHEMICAL ABSTRACTS, Band 94, 1981, Seite 321, Nr. 108207c, Columbus, Ohio, USA P.P. STUPACHENKO et al.: "Application of the wastes of the mining industry of Promor'ya in production of building materials"

(73) Patentinhaber: Bergwerksverband GmbH,
Franz-Fischer-Weg 61, D-4300 Essen 13 (DE)

(72) Erfinder: Ackermann, Manfred, Heidestrasse 49,
D-4630 Bochum 6 (DE)
Erfinder: Köhling, Rolf, Dr., Lohbusch 1,
D-4630 Bochum 6 (DE)
Erfinder: Leininger, Dieter, Dr., Waldeck 16,
D-4300 Essen (DE)

BUNDESDRUCKEREI BERLIN

## Beschreibung

Die Erfindung bezieht sich auf ein Verfahren zum Herstellen hydraulisch abbindender Formsteine, insbesondere für Bauwerke, nach dem Oberbegriff des Anspruches 1.

Formsteine der eingangs genannten Art werden einerseits in Gestalt von Kalksandsteinen und andererseits in Gestalt von Zementsteinen, bei denen das mineralische Zuschlagmaterial aus Sand besteht, im Bauwesen in großen Mengen verwendet. Hierbei wird unter Formsteinen verstanden, daß das Ausgangsmaterial in vorgefertigte und/oder vorgegebene Formen gefüllt wird und es anschließend in-oder außerhalb der Form (nach deren Entfernung) enthärtet. Gegenüber den aus Lehm oder Ton gebrannten Formsteinen haben Zementsteine den Vorteil, daß ihre Herstellung billiger und weniger energieaufwendig ist; Kalksandsteine weisen darüber hinaus besonders hohe Festigkeiten auf. Wegen der jahrzehntelangen großen Nachfrage hat sich die Rohstoffbasis vieler Kalksandstein- bzw. Zementsteinhersteller durch die Erschöpfung eigener Lagerstätten erheblich geschmälert, so daß herkömmliche Rohstoff (Sand) über große Entfernungen herangeschafft werden muß.

Bei dem Verfahren nach DE-C-2 639 178 wird anstelle von Sand ein gebrochenes Schlackengranulat, insbesondere granulierte Hochofenschlacke, als Zuschlagmaterial zusammen mit Kalk als Bindemittel für die Herstellung von Kalkgranulatsteinen verwendet, die in ihren Eigenschaften den üblichen Kalksandsteinen entsprechen bzw. nahekommen.

Dabei wird das Zuschlagmaterial in der Weise hergestellt, daß die Schlacke durch Brechen zerkleinert wird, so daß der Feinstkornanteil des Granulates unter 0,2 mm 15 bis 50 Gew.-% beträgt. Als Bindemittel wird Kalk verwendet mit einem Anteil von 1 bis 6% des Gesamtgewichtes, berechnet als CaO.

Aus der DE-A-2 522 851 ist ein hydraulischer abbindender Baustoff für den Straßenbau bekannt, dessen Mineralkorngemisch ganz oder überwiegend aus Waschbergen des Kohlebergbaus besteht und mit 4 bis 15 Gew.-% Zement oder Kalk als Bindemittel verdichtend vermörtelt wird; hierbei werden die Waschberge ohne Vorbehandlung verwendet.

Aus der FR-A-965 248 ist ein Verfahren zur Steinherstellung aus Bergematerial des Bergbaus und Zement bekannt, bei dem das Bergematerial auf 0 bis 20 mm gemahlen, mit Kalk oder einem Carbidbrei im Verhältnis 8 : 1 gemischt und dabei gründlich angefeuchtet, anschließend in einem Silo maximal 2 Tage gelagert und schließlich mit Zement im Verhältnis 8 : 1 mit weiterer Feuchtigkeit gemischt und anschließend zwecks Agglomeration geformt wird. Bei diesem bekannten Verfahren kommt es also in erster Linie auf die Einhaltung bestimmter Mischungsverhältnisse und eines Reifeprozesses an.

Aus der CA 94 108 207 C (1981) ist die Verwendung von Bergmaterial für die Steinherstellung für Bauzwecke bekannt. Dort werden ganz spezielle Abgänge untersucht und insbesondere keine Hinweise auf eine besondere Zusammensetzung des Feinkornanteiles des Bergematerials gegeben.

Aus der GB-A-1 473 517 ist ein geformtes Material für den Versatz im Bergbau bekannt, welches unter hohen Drücken starken Verformungen ohne Bruch widersteht. Das Material besteht aus etwa 14 bis 33 Vol.-% Zement und feuchten Aufbereitungsabgängen. Letztere bestehen im wesentlichen aus Ton oder einem Mineral mit tonähnlicher Struktur.

Im Bergbau, vor allem im Kohlen- und insbesondere im Steinkohlenbergbau — aber auch im Erzbergbau — fallen erhebliche Mengen Nebengestein (Berge) im Rohhaufwerk an, wobei der Anteil dieser Berge z. B. im Steinkohlenbergbau bei etwa 45% der Rohförderung liegt. In mehrstufiger Aufbereitung wird das Bergematerial von der Kohle bzw. dem Erz getrennt und dann weit überwiegend deponiert. Bemühungen um eine Weiterverwendung des Materials haben zwar schon zu einer beachtlichen Reduzierung der Deponiemenge geführt, gleichwohl muß noch immer die überwiegende Bergemenge deponiert werden. Die Schwierigkeiten bei der Nutzung und Verwendung beruhen unter anderem auf der Instabilität der Inhomogenität und dem Gehalt an brennbaren Bestandteilen dieses Materials. Ein Teil der bei der Aus- und Vorrichtung anfallenden Grubenberge werden vielfach getrennt zu Tage gefördert. Meistens werden diese Berge zusammen mit der Rohkohle bzw. dem Roherz zu Tage gefördert und den entsprechenden Aufbereitungsanlagen zugeführt; sie werden dann Bestandteil der sogenannten Aufbereitungsabgänge, insbesondere des Waschbergematerials.

Der Erfindung liegt die Aufgabe zugrunde, dem Bergematerial, insbesondere den Waschbergen des Steinkohlenbergbaus, ein neues Anwendungsgebiet zu erschließen und außerdem die Rohstoffbasis der Kalksand-, aber auch der Zementsteinindustrie zu erweitern.

Die Aufgabe wird bei einem Verfahren der eingangs genannten Art durch die kennzeichnenden Merkmale von Patentanspruch 1 gelöst; Weiterbildungen der Erfindung ergeben sich aus den Unteransprüchen.

Die Begriffe »Berge« und »Bergematerial« werden hier gleichbedeutend verwendet, während allgemein folgende Bezeichnung gilt:

Berge = Grubenberge und unbehandelte Abgänge aus Aufbereitungsanlagen,
Bergematerial = nachbehandelte Grubenberge und Aufbereitungsabgänge.

Die erfindungsgemäßen Formsteine eignen sich insbesondere für:

— hochbeanspruchtes Mauerwerk
— wärmedämmendes Mauerwerk
— Formsteine für Außenanlagen wie:
  Gehwegflächen
  Kantensteine
  Fußbodensteine
  Pflaster usw.
— Betonrohre
— Formsteine für Schachtausbau
— Wasserbausteine usw.

Wegen der negativen Eigenschaften (z. B. der ausgeprägten Zerfallsneigung) der Berge muß es überraschen, daß dieses gleichwohl als Substitut an die Stelle von Sand auch für den Anwendungsfall von Formsteinen für Bauwerke treten kann. Die einzige Voraussetzung bezüglich der Herkunft des erfindungsgemäßen Bergematerials ist seine Herkunft aus dem Nebengestein, das beim Aufschluß und/oder bei der Gewinnung von Bodenschätzen zutage gefördert wird. Bevorzugt sind sedimentäre Lagerstätten. Das Bergematerial sollte einen Mindestanteil von ca. 50 Gew.-% $SiO_2$ enthalten, wenn es für silikathydratgebundene Formsteine verwendet wird; für zementgebundene oder kunststoffgebundene Formsteine besteht hinsichtlich des $SiO_2$-Gehaltes keine Begrenzung.

Es hat sich überraschend gezeigt, daß die erfindungsgemäßen Formsteine nach den verschiedenen Herstellungsvarianten, z. B. dem Kalksandsteinverfahren leicht herzustellen sind, weil der Zerfall durch Umhüllung der Einzelkörner des Bergematerials verhindert und störende Beimengungen wie z. B. Kohle- bzw. Erzreste aus dem Bergematerial entfernt werden können. Ein solcher Stein besitzt hervorragende Eigenschaften: Der Formstein hat eine hohe Biegezugfestigkeit, eine hohe Druckfestigkeit und er ist hervorragend frostwechselbeständig. Sein Gesamtporenvolumen ist gering bei einem ungewöhnlich hohen Anteil an Feinstporen. Trotz seiner augenscheinlich glatten Oberfläche ist seine Bindung zu angrenzenden Mörtelfiguren außergewöhnlich hoch. Ein Schlagbruch findet nicht längs der Korngrenzen des Steines, sondern infolge Kornbruchs statt. Teilweise dürften diese Eigenschaften darauf zurückzuführen sein, daß das Bergegranulat einen hohen Anteil plattiger (lappiger), stengeliger (schiffiger) Körner aufweist. Außerdem neigt das Bergematerial bei der Zerkleinerung zur Bildung eines hohen Feinstkornanteils, so daß eine große reaktionsfähige Oberfläche für Kieselsäureverbindungen vorhanden ist und ein günstiger Feinstporenanteil erzielbar ist.

Der zur Formsteinherstellung notwendige Wasseranteil unterscheidet sich sofern nicht anders erwähnt nicht signifikant von den nach dem Stand der Technik bekannten Werten bei der Verwendung von Sand als Zuschlagstoff.

Formsteine für Pflasterzwecke, Straßenrandsteine und dergleichen sollen Bindemittelanteile zwischen etwa 10 bis 30 Gew.-% und evtl. 2 bis 10 Gew.-% sonstiger Beimengungen, z. B. übliche Farbstoffe und dergleichen, enthalten; bei verschleiß-, abrieb- oder hochdruckfesten Steinen wird bevorzugt ein Zuschlagmaterial gemäß Anspruch 3 verwendet; bei dem Hartstoff kann es sich z. B. um Sand, Perlkies, Basalt, Glas, Stahlschrott u. ä. handeln. Der Hartstoff weist dann in aller Regel eine gröbere Körnung auf als das Bergematerial — etwa die gröberen Körnungsanteile der sonst überlicherweise verwendeten Kieses für die fraglichen Pflastersteine; das Bergematerial sollte dann von den feinsten (schluffigen) Körnungsanteilen befreit sein.

Besonders vorteilhaft hat sich die Verwendung von Bergematerial aus dem Steinkohlenbergbau erwiesen. Besonders günstig, vor allem im Hinblick auf die bereits natürlich vorliegende Kornbandbreite, ist die Verwendung von mindestens 50% des Zuschlagmaterials aus zerkleinertem Waschbergematerial. Die Kornbandbreite beträgt etwa 0 — 200 mm, in der Regel 0 bis 150 mm.

Besonders überraschend ist es, daß das Bergematerial nach Patentanspruch 5 für die dort erwähnten silikathydratgebundenen Formsteine eingesetzt werden kann, da bei solchen als Kalksandsteine bekannten Formsteinen die chemische Reaktion zwischen dem Reaktionsmittel Kalk und dem $SiO_2$-Anteil des Zuschlagmaterials erfolgt, deshalb sind bisher ausschließlich quarzreiche Sande als Zuschlagmaterial in der Kalksandsteinherstellung verwendet worden. Die mit hydraulisch reagierenden Kunststoffen hergestellten Steine haben säurefeste, die Elastizität verbessernde, verschleißfeste und zähe Eigenschaften. — Es versteht sich, daß Mischungen der eingangs erwähnten Bindemittel in dem Umfang möglich sind, indem sich die Bindemittel miteinander vertragen.

Formsteine mit der Zusammensetzung nach den Ansprüchen 1 bis 4 können insbesondere nach dem bekannten Kalksandsteinverfahren hergestellt werden. Die Härtung erfolgt in bekannter Weise unter Druck oder drucklos an der Atmosphäre oder in der Dampfkammer. Vorzugsweise beträgt nach Anspruch 7 die Obergrenze des Kornbandes 5 mm.

Es hat sich gezeigt, daß das gezielte Zerkleinern des Gutes auf ein Kornband mit einem optimalen Anteil an Feinstkorn unter 0,2 mm sowie die besondere Kornform die genannten vorteilhaften Eigenschaften des Formsteines ergibt, der insbesondere den Ansprüchen besonders hoher Dichte genügt. Ein angemessen hoher Feinstkornanteil des Bergegranulats wirkt sich insbesondere bei dem erfindungsgemäßen Kalksandstein auch dahingehend vorteilhaft aus, daß die Zerfallsneigung des Materials durch ein Feinstkornanteil gemäß den Ansprüchen 8 oder 9 zuverlässig beseitigt wird.

Da die in den Aufbereitungsanlagen anfallenden Berge, eine heterogene Zusammensetzung haben und insbesondere störende Restwertanteile, z. B. Kohlen und Verwachsenes, aufweisen, ist es erforderlich, vor oder beim Zerkleinern eine Vorbehandlung zur Abscheidung der störenden Bestandteile durchzuführen; in der Regel reicht es, das Material einer Klassierung nach Anspruch 1 zu unterwerfen — eine Behandlung dergestalt, daß je nach mineralogisch/petrographischer Eigenschaftsverteilung unterschiedliche Kornbänder mit einer oberen Begrenzung zwischen 56 bis 10 mm abgeschieden werden, erfolgt, wenn an die Formsteine etwas geringere Anforderungen gestellt sind bzw. die mineralogisch/petrographische Eigenschaftsverteilung des Bergematerials dies zuläßt. Es hat sich überraschend gezeigt, daß allein durch Klassierung der Waschberge ein gutes Ausgangsmaterial für die Formsteine anfällt, bei dem insbesondere störende Anteile auf einen unbedenklichen Rest verringert sind.

In manchen Aufbereitungsanlagen fallen die Berge aufgrund des jeweiligen Aufbereitungsverfahrens bereits in verwendbaren Korngrößenbereichen an (Anspruch 10).

Es hat sich weiterhin überraschend gezeigt, daß nicht nur das Klassieren der Waschberge, sondern auch das Sortieren nach der Dichte, eine geeignete Maßnahme ist, um störende Bestandteile auszusondern. Dadurch läßt sich der Anwendungsbereich teilweise auch auf Waschbergematerial des Korngrößenbereichs, z. B. unter 60 bis etwa 0,1 mm ausdehnen. Waschberge, die mit Korngrößen unter 60 mm, vorzugsweise bis 56 mm bzw. darunter abgeschieden werden, können nach Anspruch 11 einer Dichtesortierung unterworfen und das Zielgut erfindungsgemäß verwendet werden. Die Rohdichte $\rho_R$ errechnet sich dabei bekanntlich aus der Masse $m_{tr}$, festgestellt nach dem Trocknen bei 105° C und dem Rohvolumen $V_R$, einschließlich der Poren und Zwischenräume als $\rho_R = m_{tr} : V_R$. Die Rohdichte ist daher immer vom Soll-Kornband festzustellen. Das noch zuverlässigere, aber umständlichere, Dichtemaß ist die Stoffdichte $\rho$, auf das Volumen eines Stoffes ohne Poren und Zwischenräume bezogene Masse m mit $\rho = m : V$ (g/cm$^3$). (Siehe Prof. Dr. Hermann Schäffler, Baustoffkunde 1982, Vogel-Verlag, Kamprathreihe).

Die anfallenden Waschberge, besonders in der Körnung kleiner als 56 mm, können vor dem Zerkleinern eine Feuchtigkeit haben, die den Zerkleinerungsvorgang möglicherweise behindert. Um dem abzuhelfen, kann es sich, insbesondere für die silikathydratgebundene Formsteine, empfehlen, gemäß Anspruch 14 dem Bergematerial das erforderliche Reaktionsmittel in Form von Stückkalk zuzugeben, wenn das Material kurzfristig weiterverarbeitet werden kann. Im Normalfall empfiehlt es sich, feuchtes Material mit einem Wassergehalt bevorzugt über 10 Gew.-% (insbesondere mit einer Körnung unter 60 mm) vor dem Zerkleinern mit gröberen Bergen zu mischen.

Bei zementgebundenen Formsteinen bewirkt eine Vorgehensweise gemäß Anspruch 12 eine Verminderung an Bindemittel, während das Vorgehen gemäß Anspruch 13 die Reaktionsfreudigkeit erhöht. Andererseits kann beim Verwenden gröberer Berge die störende Staubentwicklung durch die gezielte Zugabe von feineren und feuchteren Bergen geeigneter Dichte verringert werden (Anspruch 18).

Das erfindungsgemäße Zuschlagmaterial kann selbstverständlich auch in bekannter Weise noch dahingehend modifiziert werden, daß durch einen Zusatz von leichten (Anspruch 15) bzw., insbesondere für zementgebundene Formsteine, harten Zuschlagstoffen Formsteine mit modifizierten Eigenschaften, beispielsweise hinsichtlich der Wärmeleitfähigkeit bzw. hoher Druck- und Verschleißfestigkeit herzustellen sind. Nach Anspruch 15 sind beispielsweise Flugasche bzw. Perlkies solche zusätzlichen Zuschlagsmaterialien. Flugasche ist ein mineralischer Bestandteil der Rauchgase industrieller Verbrennungsanlagen, die in den Entstaubern abgeschieden wird; Perlkies ist eine Kornfraktion des Quarzsanders mit einer Körnung von in der Regel 8 bis 2 mm.

Das Verdichten des fertigen Gemenges in Formen kann in üblicher Weise durch Pressen oder Rütteln erfolgen, jedoch ist es nach den Ansprüchen 16 bzw. 17 zweckmäßig, die Preßfeuchte deutlich geringer und den Zement- bzw. Kalkgehalt etwas niedriger einzustellen als bei der Herstellung von Zement- bzw. Kalksandsteinen mit natürlichen Quarzsanden.

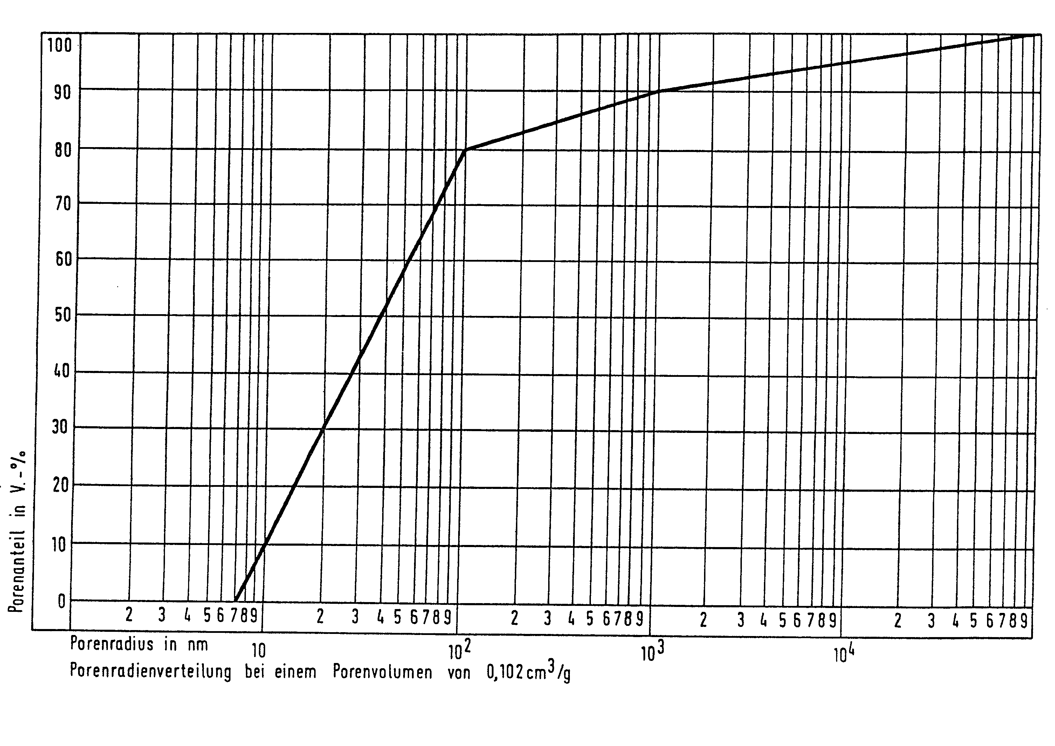

Weitere Ziele, Merkmale, Vorteile und Anwendungsmöglichkeiten der vorliegenden Erfindung ergeben sich aus der nachfolgenden Beschreibung von Ausführungsbeispielen und der beiliegenden Zeichnung:

### Beispiel 1

Einer Aufbereitungsanlage des Ruhrgebietes wurde Waschbergematerial entnommen und bei 56 mm klassiert. Der Grobanteil wurde in einem Backenbrecher gebrochen und in einer Tellermühle gemahlen. Das Mahlgut hatte folgende durchschnittliche Siebanalyse:

| Körnung | (mm) | Gew.-% | Gew.-% |
|---|---|---|---|
| 3,15 | −1,0 | 64,86 | |
| 1,0 | −0,5 | 8,52 | |
| 0,5 | −0,2 | 5,62 | 79 |
| 0,2 | −0,125 | 3,79 | |
| 0,125 | −0,063 | 3,98 | |
| 0,063 | −0,0464 | 4,82 | |
| 0,0464 | −0,0292 | 0,87 | |
| 0,0292 | −0,0094 | 1,85 | |
| 0,0094 | −0 | 5,69 | 21 |
| | | 100,00 | 100 |

Der Feinstkornanteil bis 0,2 mm Korngröße beträgt mithin etwa 21 Gew.-%.

Eine grobe Abschätzung der in den Waschbergen enthaltenen Gesteinarten zeigte vorrangig verschiedene Schiefertone, Sandschiefertone und Sandstein. Die röntgenographische Untersuchung ergab in der Hauptsachefolgenden Mineralbestand: 20—30 Gew.-% Quarz; 50—60 Gew.-% Illit, 10% Kaolinit, 5—10% Siderit, Feldspat und Chlorite deutlich unter 5%, Dolomit war praktisch nicht nachweisbar. Die Bergeprobe zeigt mithin eine für Aufbereitungsabgänge im Steinkohlenbergbau übliche Mineralverteilung nämlich verschiedene Alumiumsilikate oxydische Mineralien und Karbonate.

In den Beispielen beziehen sich alle Gewichte der zu mischenden Materialien auf das Gewicht des Zuschlagstoffes, einschließlich der 4 bis 5 Gew.-% seiner Restfeuchte.

1a) Das gemahlene Waschbergegranulat wurde mit 6,5 Gew.-% Kalkhydrat und 5,2 Gew.-% Wasser vermischt, nach einer Reifezeit (Reaktionszeit) von 1,5 Stunden mit einem Druck von 20 N/mm² in Form gepreßt. Die Formsteine wurden in Autoklaven bei 16 bar und 220° C 4 Stunden ausgehärtet. Der fertige Formstein besteht zu 93% aus Waschbergegranulat und 7% Kalk, berechnet auf gesamt CaO; freies CaO ist nicht vorhanden. Der Kieselsäureanteil beträgt 57 Gew.-%. Die trockenen Formsteine haben eine Rohdichte trocken 2070 kg/m³; luftfeucht haben die Steine eine Biegezugfestigkeit von 6,3 N/mm² und eine Druckfestigkeit von im Mittel 25,9 N/mm². Die Prüfung auf Frostbeständigkeit ergab nach 50 Frostzyklen keinerlei Schäden an den Formsteinen; ihre Druckfestigkeit war nach 50 Frostzyklen um höchstens 20% verringert. Das Porenvolumen der Formsteine betrug ca. 0,1 cm³/g; in anliegender Figur ist die zugehörige Verteilung der Porenradien dargestellt; 80% aller Poren haben einen Porenradius bis max. 0,1μm. Die Steine sind scharfkantig und zeigen eine glatte Oberfläche.

1b) Bei der Abbindung in der Dampfkammer betrug die Druckfestigkeit unter sonst gleichen Bedingungen knapp unter 20 N/mm². Beim Abbinden an der Luft wurde eine Druckfestigkeit nach 28 Tagen bei 22 N/mm² festgestellt.

2a) Bei diesem Ausführungsbeispiel wurden den durch Klassierung abgetrennten Grobbergen Grubenberge (Vortriebsberge aus dem Streckenvortrieb) beigegeben. Der Anteil der Grubenberge betrug 30 Gew.-% des Gesamtzuschlags. Das Bergematerial wurde in der vorbeschriebenen Weise (Beispiel 1a) zerkleinert und mit 7 Gew.-% Kalkhydrat sowie 6 Gew.-% Wasser gemischt, nach der Reifezeit verpreßt und wie beschrieben gehärtet.

Die Steine dieser Serie waren heller, zeigten aber in ihren sonstigen Eigenschaften keine wesentlichen Abweichungen gegenüber den Steinen nach Beispiel 1a.

2b) Bei diesem Ausführungsbeispiel wurde als Zuschlagstoff das Bergematerial mit, gegenüber Beispiel 1, modifiziertem Kornband eingesetzt. Nach Absieben des Feinkornanteils 0—0,2 mm und einer Zugabe von 40 Gew.-% Grobsand 2—8 mm wurden bei einem Mischungsverhältnis von 25 kg Zuschlagstoff aus Bergematerial, 4,3 kg Zement und 1,3 l H₂O nach Abbindung an der Luft nach 28 Tagen eine Druckfestigkeit von 37,3 N/mm² festgestellt.

3a) Bei einem Ausführungsbeispiel wurden die durch Klassierung abgetrennten Grobberge, wie in Beispiel 1a beschrieben, zerkleinert und anschließend mit einem Anteil von 15 Gew.-% Flugasche gemischt. Als Flugasche wurde der Staub aus einer Wirbelschichtversuchsanlage entnommen, die mit Feinwaschbergen 0—5 mm Korngröße beschickt wurde. Der Gesamtzuschlag wurde mit 7 Gew.-% Kalkhydrat sowie 6 Gew.-% Wasser gemischt und nach der Reifezeit wie beschrieben gehärtet. Durch die Beigabe der Flugasche wurde die Rohdichte auf 1620 kg/m³ reduziert.

3b) Bei diesem Ausführungsbeispiel wurden die Klassierung abgetrennten Grobberge, wie in Beispiel 1 beschrieben, zerkleinert und anschließend mit einem Anteil von 15 Gew.-% Flugasche gemischt. Als Flugasche wurde der Staub einer Wirbelschichtfeuerungssanlage (Versuchsanlage) entnommen, die mit Feinwaschbergen 0—5 mm Korngröße beschickt wurde. Der Gesamtzuschlag wurde mit 10 Gew.-% Zement sowie 7 Gew.-% Wasser gemischt und gepreßt. Durch die Beigabe der Flugasche wurde die Rohdichte auf 1650 kg/m³ reduziert.

4a) Bei diesem Ausführungsbeispiel wurde wie im Beispiel 3a verfahren, jedoch wurde die Flugasche durch Bettasche aus der Wirbelschichtfeuerungsanlage ersetzt. Das Bettmaterial bestand ebenfalls aus Feinwaschbergen bis 5 mm Korngröße, jedoch ohne den abgeschiedenen Feinstanteil aus der Filterentstaubung (Filterstaubanteil). Die Mischung war ebenfalls gut preßbar. Die Steine zeigten nach dem Härten eine körnige Oberfläche, ihre Rohdichte wurde mit 1795 kg/m³ festgestellt.

4b) Bei diesem Ausführungsbeispiel wurde wie im Beispiel 3b verfahren, jedoch wurde die Flugasche durch Bettasche aus der Wirbelschichtfeuerungsanlage ersetzt. Das Bettmaterial bestand ebenfalls aus Feinwaschbergen bis 5 mm Korngröße, jedoch ohne den abgeschiedenen Feinstanteil aus der Filterentstaubung. Die Mischung war ebenfalls gut preßbar. Die Steine zeigten nach dem Härten eine körnige Oberfläche, ihre Rohdichte wurde im Mittel mit 1800 kg/m³ festgestellt.

5) Bei diesem Ausführungsbeispiel wurde der Zuschlag, wie im Beispiel 2a beschrieben, zerkleinert und mit einem Anteil von 10,5 Gew.-% Brantkalk und 13 Gew.-% Wasser sowie als reaktionsfördernde und siedepunkterhöhende Komponenten 2,5 Gew.-% Natriumhydroxyd und 4,0 Gew.-% Wasserglas gemischt. Nach der Homogenisierung wurde die Mischung in Formen gegossen und nach 3stündiger Reifezeit über einen Zeitraum von 240 Min. kontinuierlich auf 160°C erhitzt und nach einer Haltezeit von 5 Stunden dosiert abgekühlt. Die Formsteine zeigen eine rißfreie und geschlossene Oberfläche.

6a/b) Bei diesem Ausführungsbeispielen wurde das durch Klassieren abgetrennte Waschbergematerial bis zu 56 mm Korngröße gemäß den Beispielen 1 bzw. 2 nach der Dichte sortiert, wobei eine Rochdichte (Schüttdichte) von 2,5 g/cm³ eingestellt wurde und das schwere Gut in gleicher Weise weiterverarbeitet, insbesondere auf die Körnung gemäß Tabelle vermahlen. Die fertigen Steine haben praktisch übereinstimmende Eigenschaften, insbesondere hinsichtlich Biegezugfestigkeit, Druckfestigkeit und Frostbeständigkeit.

In der Regel genügt es, die Rohdichte (Schüttdichte) des fertig zerkleinerten Zuschlagstoffes oder einer entsprechend verarbeiteten Probe, zu bestimmen.

## Patentansprüche

1. Verfahren zum Herstellen hydraulisch abbindender Formsteine, insbesondere für Bauwerke, bestehend aus

a) 4 bis 30 Gew.-% hydraulischen oder gleichartig wirkenden Bindemitteln, wie Zement, hochhydraulischen Kalk oder hydraulisch reagierenden Kunststoffen oder Mischungen solcher Bindemittel;

b) etwa 60 bis 95 Gew.-% mineralisches Zuschlagmaterial und

c) 0 bis 10 Gew.-% sonstige Beimengungen,

bei dem ein Gemenge aus Bindemittel, körnigem Zuschlagmaterial und Wasser in Formen gefüllt und anschließend gehärtet wird, dadurch gekennzeichnet, daß in einem Körnungsbereich von 0 mm bis etwa 200 mm oder mehr anfallendes Nebengestein (Bergematerial) aus dem Bergbau in der Weise klassiert wird, daß das Kornband bis 56 mm, und gegebenenfalls noch bis 60 mm, abgeschieden (ausklassiert) wird und der abgetrennte Grobanteil auf ein Kornband bis maximal 15 mm Korngröße mit einem Feinstkornanteil von 10 bis 45 Gew.-% unter 0,2 mm zerkleinert (gebrochen), insbesondere gemahlen wird, und daß das so erhaltene Bergegranulat als Zuschlagmaterial verwendet wird.

2. Verfahren nach Anspruch 1, gekennzeichnet durch die Herkunft des Zuschlagmaterials aus dem Kohlebergbau, insbesondere Steinkohlenbergbau.

3. Verfahren nach Anspruch 1 oder 2, dadurch gekennzeichnet, daß das Zuschlagmaterial bis zu 60 Gew.-% eines an sich bekannten körnigen Hartstoffes, bestehend oder hergestellt aus einem Hartgestein oder Metall, aufweist.

4. Verfahren nach einem der Ansprüche 1 bis 3, dadurch gekennzeichnet daß das Zuschlagmaterial aus zerkleinertem Waschbergematerial besteht mit einem Anteil von mindestens 50 Gew.-%.

5. Verfahren nach einem der Ansprüche 1 bis 4, dadurch gekennzeichnet, daß der Stein silikathydratgebunden ist mit 5 bis 10 Gew.-% Kalk, berechnet als CaO und 88 bis 95 Gew.-% des etwa 1/3 bis 2/3 Kieselsäure enthaltenden Zuschlagmaterials sowie als Rest 0 bis 2 Gew.-% von den sonstigen Beimengungen aufweist.

6. Verfahren nach einem der Ansprüche 1 bis 5, dadurch gekennzeichnet, daß das Gemenge unter Zusatz von reaktionsfördernden und siedepunkterhöhenden Substanzen, wie Natriumhydroxid, unter Normaldruck ausgehärtet wird.

7. Verfahren nach einem der Ansprüche 1 bis 6, dadurch gekennzeichnet, daß das Bergematerial auf ein Kornband bis max. 5 mm zerkleinert wird.

8. Verfahren nach einem der Ansprüche 1 bis 7, dadurch gekennzeichnet, daß der Feinkornanteil des Bergegranulats bis max. 0,2 mm Korngröße 18 bis 35 Gew.-% beträgt.

9. Verfahren nach Anspruch 8 dadurch gekennzeichnet, daß der Feinstkornanteil des Bergegranulats sich aufteilt in folgende Teilbereiche (Korngröße) : 0—0,01 mm 4 bis 10 Gew.-%; 0,01—0,2 mm 14 bis 31 Gew.-%.

10. Verfahren nach einem der Ansprüche 1 bis 9, dadurch gekennzeichnet, daß als Ausgangsmaterial jeweils ein Bergematerial verwendet wird, wie es als Teilstrom bei den einzelnen Aufbereitungsschritten anfällt.

11. Verfahren nach einem der Ansprüche 1 bis 10, dadurch gekennzeichnet, daß

a) das Bergematerial mit Korngröße unterhalb von 60 mm derart sortiert wird, daß eine Rohdichte von mindestens 2,1 g/cm³, vorzugsweise 2,5 g/cm³ oder mehr, erhalten und

b) dieses Material auf die erforderliche Körnung zerkleinert und als Zuschlagstoff verwendet wird.

12. Verfahren nach einem der Ansprüche 1 bis 11, dadurch gekennzeichnet, daß das Bergegranulat nach der Zerkleinerung einer Klassierung unterzogen wird, bei der ein Bergegranulat im Korngrößenbereich etwa oberhalb 0,01 mm, vorzugsweise oberhalb 0,063 mm, anfällt, das für zementgebundene Formsteine verwendet wird.

13. Verfahren nach Anspruch 12, dadurch gekennzeichnet, daß das Bergegranulat im Korngrößenbereich unterhalb von etwa 0,063 mm, vorzugsweise unterhalb von 0,01 mm, dem Bergegranulat für silikathydratgebundene Formsteine zugesetzt wird.

14. Verfahren nach einem der Ansprüche 1 bis 13, dadurch gekennzeichnet, daß dem Bergematerial vor dem Vermahlen mindestens ein Teil der Bindemittelmenge in Form von gebranntem Stückkalk beigegeben wird.

15. Verfahren nach einem der Ansprüche 1 bis 14, dadurch gekennzeichnet, daß der verwendete Zuschlagstoff mit einem Anteil bis zu 50 Gew.-% aus Leichtzuschlagstoffen, wie Flugasche sowie ggf. Hartzuschlagstoffen, wie Perlkies, besteht.

16. Verfahren nach einem der Ansprüche 1 bis 15, dadurch gekennzeichnet, daß das Gemenge aus Bindemittel, Zuschlagstoff und Wasser mit einer Preßfeuchte unter 5 Gew.-%, vorzugsweise mit 3 Gew.-% Feuchte, in Formen gepreßt wird.

17. Verfahren nach Anspruch 16, dadurch gekennzeichnet, daß das Gemenge 5 bis höchstens 7 Gew.-% Kalk (berechnet als CaO) bzw. 5 bis höchstens 30 Gew.-% Zement als Reaktionsmittel bzw. Bindemittel enthält.

18. Verfahren nach einem der Ansprüche 1 bis 17, dadurch gekennzeichnet, daß vor dem Zerkleinerungsschritt groberes Bergematerial zur Staubminderung mit feinerem Waschbergematerial gemischt wird.

## Claims

1. A process for the manufacture of hydraulically setting shaped bricks, more particularly for constructions, comprising:

a) 4 to 30 wt.% of hydraulic or similarly acting binding agents, such as cement, high-hydraulic lime, or hydraulically reacting plastics materials, or mixtures of binding agents of this type;

b) approximately 60 to 95 wt.% of mineral aggregate material, and

c) 0 to 10 wt.% of other admixtures,

in which a mixture of binding agent, granular aggregate material, and water is put into moulds and then hardened, characterised in that country rock (waste material) from mining, which falls within a grain size range of 0 mm to approximately 200 mm or more, is sized such that the size range up to 56 mm, and optionally up to 60 mm, is extracted (separated out) and the separated coarse portion is crushed (broken up), more particularly ground, to a size range with a maximum of 15 mm and with 10 to 45 wt.% of a finest grain fraction of less than 0.2 mm, and the granulated waste material obtained is used as the aggregate material.

2. A process according to claim 1, characterised in that the aggragate material originates from coal mining, more particularly hard coal mining.

3. A process according to claim 1 or 2, characterised in that the aggregate material comprises up to 60% by weight of a granular hard material known per se, comprising or manufactured from a hard rock or metal.

4. A process according to any of claims 1 to 3, characterised in that the aggregate material comprises at least 50% by weight of crushed washery dirt.

5. A process according to any of claims 1 to 4, characterised in that the stone is bound with hydrated silica and has 5 to 10 wt.% of lime, calculated as CaO, and 88 to 95 wt.% of the aggregate material containing approximately 1/3 to 2/3 silicic acid and 0 to 2 wt.% of the other admixtures as the remainder.

6. A process according to any of claims 1 to 5, characterised in that the mixture is hardened at normal pressure with the addition of substances which promote the reaction and increase the boiling point, such as sodium hydroxide.

7. A process according to any of claims 1 to 6, characterised in that the waste material is crushed to a size range with a maximum of 5 mm.

8. A process according to any of claims 1 to 7, characterised in that the finest grain fraction of the granulated waste material, with a maximum grain size of 0.2 mm, is 18 to 35 wt.%.

9. A process according to claim 8 characterised in that the finest grain fraction of the granulated waste material can be divided into the following sub-divisions (grain size) : 0—0.01 mm, 4 to 10 wt.%; 0.01—0.2 mm, 14 to 31 wt.%.

10. A process according to any of claims 1 to 9, characterised in that a waste material which is obtained as a by-product in the individual processing steps is used in each case as the starting material.

11. A process according to any of claims 1 to 10, characterised in that

a) the waste material having grain sizes of less than 60 mm is sized such that a bulk density of at least 2.1 g/cm$^3$, preferably 2.5 g/cm$^3$ or more, is obtained and

b) the said material is crushed to the required grain size and used as the aggregate.

12. A process according to any of claims 1 to 11, characterised in that, after crushing, the granulated waste material is subjected to sizing from which a granulated waste material in the size range approximately above 0.01 mm, and preferably above 0.063 mm, is obtained, which is used for shaped bricks bound with cement.

13. A process according to claim 12, characterised in that the granulated waste material in the size range below approximately 0.063 mm, preferably below 0.01 mm is added to the granulated waste material for shaped bricks bound with hydrated silica.

14. A process according to any of claims 1 to 13, characterised in that, prior to crushing, at least one part of the binding agent mixture is added to the waste material in the form of lump lime.

15. A process according to any of claims 1 to 14, characterised in that the aggregate which is used in a proportion of up to 50 wt.%, comprises lightweight aggregates such as flue dust and optionally hard aggregates such as pearl gravel.

16. A process according to any of claims 1 to 15, characterised in that the mixture of binding agent, aggregate, and water is pressed into moulds with a pressing humidity of less than 5 wt.%, and preferably with 3 wt.% humidity.

17. A process according to claim 16, characterised in that the mixture contains 5 to a maximum of 7 wt.% of lime (calculated as CaO) or 5 to a maximum of 30 wt.% of cement as the reaction agent or binding agent.

18. A process according to any of claims 1 to 17, characterised in that, prior to the crushing step, the more coarse waste material is mixed with washery dirt in order to reduce dust.

## Revendications

1. Procédé de production de briques à prise hydraulique, en particulier pour des bâtiments, composées de

a)   4 à 30% en poids de liants hydrauliques ou possédant une action analogue tels que du ciment, de la chaux fortement hydraulique ou des matières plastiques à réaction hydraulique ou de mélanges de tels liants;

b)   environ 60 à 95% en poids d'un granulat ou agrégat minéral et

c)   à 10% en poids d'autres additifs,

dans lequel un mélange de liant, d'agrégat grenu et d'eau est réparti dans des moules, puis durci, caractérisé en ce que l'on classifie les stériles provenant d'une exploitation minière, dont la granulométrie est comprise entre 0 mm et environ 200 mm ou plus, de telle façon que la fraction granulométrique jusqu'à 56 mm et le cas échéant jusqu'à 60 mm est séparée et la fraction grossière séparée est réduite, par exemple par un broyage, à un produit granulé d'une dimension maximale de 15 mm et d'une proportion en fines d'une dimension inférieure à 0,2 mm entre 10 et 45% en poids, ce produit granulé étant employé comme agrégat.

2. Procédé suivant la revendication 1, caractérisé en ce que le granulat ou agrégat utilisé provient d'un charbonnage, en particulier d'une mine de houille.

3. Procédé suivant la revendication 1 ou 2, caractérisé en ce que l'agrégat contient jusqu'à 60% en poids d'un matériau dur connu en soi, constitué de ou produit à partir d'une roche dure ou d'un métal.

4. Procédé suivant l'une des revendications 1 à 3, caractérisé en ce que l'agrégat est constitué à raison d'au moins 50% en poids de stériles de lavage concassés.

5. Procédé suivant l'une des revendications 1 à 4, caractérisé en ce que la brique est liée par liasion silicate hydraté par 4 à 10% en poids de chaux, calculée comme CaO, et contient 88 à 95% en poids d'agrégat avec environ 1/3 à 2/3 d'acide silicique, le reste étant constitué de 0 à 2% en poids d'autres additifs.

6. Procédé suivant l'une des revendications 1 à 5, caractérisé en ce que le mélange est durci à la pression normale apreès incorporation de substances favorisant la réaction et élevant le point d'ébullition telles que l'hydroxyde de sodium.

7. Procédé suivant l'une des revendications 1 à 6, caractérisé en ce que les stériles sont concassés jusqu'à une granulométrie maximale de 5 mm.

8. Procédé suivant l'une des revendications 1 à 7, caractérisé en ce que la proportion en fines du produit granulé concassé, d'une dimension maximale de 0,2 mm, est comprise entre 18 et 35% en poids.

9. Procédé suivant la revendication 8, caractérisé en ce que la fraction de fines du produit granulé concassé contient entre 4 et 10% en poids de grains d'une dimension inférieure à 0,01 mm et entre 14 et 31% en poids de grains d'une dimension comprise entre 0,01 et 0,2 mm.

10. Procédé suivant l'une des revendications 1 à 9, caractérisé en ce que le matériau de départ est fourni par les stériles et déchets provenant des diverses opérations de préparation et (ou) de traitement.

11. Procédé suivant l'une des revendications 1 à 10, caractérisé en ce que

a)   on classifie les stériles d'une granulométrie inférieure à 60 mm de façon à obtenir un produit avec une masse volumique apparente d'au moins 2, 1 et de préférence de 2,5 g/cm$^3$ ou plus et

b)   on réduit ce produit à la granulométrie voulue et l'utilise comme agrégat.

12. Procédé suivant l'une des revendications 1 à 11, caractérisé en ce que le produit granulé concassé est soumis à un criblage pour obtenir un granulat d'une granulométrie supérieure à environ 0,01 mm et de préférence supérieure à 0,063 mm, qui est employé pour la préparation de briques liées au ciment.

13. Procédé suivant la revendication 12, caractérisé en ce que le produit granulé d'une granulométrie inférieure à environ 0,063 et de préférence inférieure à 0,01 mm est incorporé au granulat destiné à la préparation de briques liées au silicate hydraté.

14. Procédé suivant l'une des revendications 1 à 13, caractérisé en ce que l'on incorpore aux stériles, avant le broyage, au moins une proportion partielle du liant sous forme de chaux en pierre calcinée.

15. Procédé suivant l'une des revendications 1 à 14, caractérisé en ce que l'agrégat utilisé contient jusqu'à 50% en poids de matériaux légers tels que des cendres volantes et éventuellement des matériaux durs comme du gravier roulé.

16. Procédé suivant l'une des revendications 1 à 15, caractérisé en ce que le mélange de liant, d'agrégat et d'eau, comprimé dans des moules, possède un taux d'humidité inférieur à 5 et de préférence de l'ordre de 3% en poids.

17. Procédé suivant la revendication 16, caractérisé en ce que le mélange contient entre 5 et au maximum 7% en poids de chaux, calculée comme CaO, et entre 5 et au maximum 30% en poids en poids de ciment comme agent de réaction ou liant.

18. Procédé suivant l'une des revendications 1 à 17, caractérisé en ce que l'on mélange aux stériles plus grossiers, avant de les soumettre à l'opération de concassage, des stériles ou déchets de lavage plus fins afin de minimiser la formation de poussière.

Porenradienverteilung bei einem Porenvolumen von 0,102 cm$^3$/g

Porenanteil in V.-%

Porenradius in nm

0 059 444